# EUROPÄISCHE PATENTSCHRIFT

(11) **EP 1 086 616 B1**
(45) Veröffentlichungstag und Bekanntmachung des Hinweises auf die Patenterteilung: **02.02.2005**
(21) Anmeldenummer: 00118341.7
(22) Anmeldetag: 24.08.2000
(51) Int. Cl.: A01C 7/08, A01C 15/00

(54) **Saatgutbehälter für ein Sägerät**
Seedpackage for sowing device
Paquet de semence pour semoir

(30) Priorität: 23.09.1999 US 401882
(43) Veröffentlichungstag der Anmeldung: 28.03.2001
(73) Patentinhaber: DEERE & COMPANY, Moline, Illinois 61265-8098 (US)
(72) Erfinder: Foley, Daniel Michael, Geneseo, IL 61254 (US); Stanfill, Ralph Everett, Geneseo, IL 61254 (US)
(74) Vertreter: Holst, Sönke, Dr.

(56) Entgegenhaltungen:
- DE-C- 393 099
- US-A- 4 715 515

## Beschreibung

Die Erfindung betrifft einen Saatgutbehälter für ein Sägerät, mit vier seitlichen Wänden und einer Bodenwand, die eine Vielzahl voneinander beabstandeter Öffnungen aufweist, durch die Saatgut fallen kann, und mit einem oberhalb der Bodenwand angeordneten Einsatz zum Abdecken der Bodenwand, der einen einer Öffnung zugeordneten Trichterabschnitt aufweist, sowie einen einteiligen Einsatz für einen Saatgutbehälter eines Sägeräts, mit einem Trichterabschnitt, der ein offenes unteres Ende aufweist und mit sich von dem offenen unteren Ende trichterförmig nach oben öffnenden, geneigten Wänden versehen ist.

Der Saatgutbehälter einer Sä- oder Drillmaschine hat typischerweise eine flache Bodenwand, die sich zwischen den gegenüberliegenden Enden des Saatgutbehälters erstreckt. Vordere und rückwärtige Wände neigen sich zur Bodenwand nach unten, so dass das Saatgut zur Bodenwand fließen wird. Die Bodenwand ist zwischen den gegenüberliegenden Endwänden des Saatgutbehälters mit einer Vielzahl voneinander beabstandeter Öffnungen versehen. Ein Messsystem ist jeder der Öffnungen zugeordnet, um Saatgut abzumessen, das durch die Öffnungen aus dem Saatgutbehälter fällt.

Ein mit der flachen Bodenwand verbundenes Problem ist, dass sich Saatgut auf der Bodenwand zwischen den Öffnungen ansammeln und nicht durch die Öffnungen fallen wird. Das hat ein unvollständiges Entleeren des Saatgutbehälters von dem Saatgut zum Ergebnis. Dadurch wird es nötig, dass der Bediener einen Handfeger benutzt, um das Saatgut von der Bodenwand fort und in die benachbarten Öffnungen zu fegen.

Eine Lösung des Problems des unvollständigen Entleerens des Saatgutbehälters ist, einzelne Metalleinsätze zwischen allen Öffnungen einzusetzen. Die Metalleinsätze haben die Form eines umgekehrten V und bedecken die Bodenwand zwischen Öffnungen. Die Einsätze schaffen sich neigende Wände zwischen jeder der Öffnungen und stellen dadurch sicher, dass der Saatgutbehälter sich vollständig leeren wird, wobei das Saatgut durch eine der Öffnungen fallen wird. Die Metalleinsätze sind einzeln am Saatgutbehälter durch eine Vielzahl von Halterungen angebracht, die am Saatgutbehälter angeschraubt sind. Während die Einsätze geeignet sind, den Saatgutbehälter vollständig zu entleeren, ist ein beträchtlicher Betrag an Arbeit und Zeit zum Zusammenbauen erforderlich, um die Einsätze im Saatgutbehälter zu installieren. Zusätzlich wird ein Silikonwulst um die Kanten jedes Einsatzes herum angebracht, wodurch die Arbeit beim Zusammenbau und die Materialkosten weiter ansteigen.

In der DE 393 099 A wird ein Einsatzbehälter für den Säkasten bei Sämaschinen vorgeschlagen. Der Einsatzbehälter setzt sich aus vier Wänden zusammen, die trichterförmig nach unten zusammenlaufen. Am Boden des Einsatzbehälters befindet sich eine einzige Öffnung, durch die das Saatgut zu einem Särad gelangt. Dieser Einsatzbehälter dient zur Unterteilung des Säkastens, so dass der Behälter nur die Saat aufnehmen kann, die zur Beschickung des einzelnen Särads notwendig ist. Sollen mehrere Säräder mit derartigen Einsatzbehältern ausgestattet werden, erweist sich ihre Anbringung aufgrund der hohen Anzahl als aufwändig.

Das der Erfindung zugrunde liegende Problem wird darin gesehen, einen Saatgutbehälter zu schaffen, der ohne übermäßige Arbeit beim Zusammenbau und Kosten ein vollständiges Entleeren des Saatgutbehälters gewährleistet.

Dieses Problem wird erfindungsgemäß durch die Lehre der Patentansprüche 1 und 11 gelöst, wobei in den weiteren Patentansprüchen Merkmale aufgeführt sind, die die Lösung in vorteilhafter Weise weiterentwickeln.

Es wird vorgeschlagen, einen Einsatz zu verwenden, der eine Mehrzahl von (also wenigstens zwei) Trichterabschnitten aufweist, die jeweils einer Öffnung in der Bodenwand zugeordnet sind. Der Einsatz deckt somit einen längeren Abschnitt der Bodenwand mit mehreren Öffnungen ab. Die Trichterabschnitte haben ein unteres, offenes Ende, das mit je einer Öffnung in der Bodenwand des Saatgutbehälters ausgerichtet ist. Die Trichterabschnitte weisen zwischen den Öffnungen in der Bodenwand geneigte Wände auf, um die flachen Abschnitte der Bodenwand abzudecken. Durch die geneigten Wände der Trichterabschnitte wird der Saatgutbehälter stets vollständig entleert.

Auf diese Weise wird der Zusammenbau des Saatgutbehälters wesentlich erleichtert und beschleunigt, da die Zahl der zu montierenden Einsätze verringert ist. Außerdem wird wesentlich weniger Silikon benötigt, um den Einsatz abzudichten, da nur zwischen dem Umfang des Einsatzes und dem Saatgutbehälter ein Silikonwulst anzubringen ist.

Der Einsatz kann in Einbuchtungen eingerastet sein, die sich im Übergangsbereich zwischen einer Vorderwand des Saatgutbehälters und einer darunter angeordneten, senkrechten Wand, die Teil eines unteren, die mit Öffnungen versehene Bodenwand aufweisenden Trogs ist, sowie im Übergangsbereich zwischen entsprechenden rückwärtigen Wänden des Saatgutbehälters und des Trogs befinden.

Der Einsatz ist vorzugsweise aus Kunststoff hergestellt. Es kann ein Spritzguss- oder ein anderes Gussverfahren bei der Herstellung Verwendung finden.

In einer Ausführungsform der Erfindung ist der Einsatz einteilig und erstreckt sich zwischen den Endwänden des Saatgutbehälters. In einer anderen Ausführungsform finden zwei oder mehr hintereinander angeordnete Einsätze Verwendung, die sich aufgrund der geringeren Abmessungen preiswerter als ein einteiliger, relativ langer Einsatz herstellen lassen. Aus Kostengründen ist bevorzugt, wenn diese Einsätze identisch sind. Sie können auch Merkmale aufweisen, die es ermöglichen, sie an ihren Enden zusammenzufügen. Derartige Merkmale sind beispielsweise übereinander angeordnete, unterschiedlich hohe Streifen, von denen jeweils zwei seitlich nebeneinander angeordnet sind.

In den Zeichnungen ist ein nachfolgend näher beschriebenes Ausführungsbeispiel der Erfindung dargestellt. Es zeigt:
- Fig. 1: eine perspektivische Ansicht einer Sämaschine, die einen erfindungsgemäßen Einsatz des Saatgutbehälters aufweist,
- Fig. 2: einen Schnitt durch den unteren Bereich des Saatgutbehälters entlang der Linie 2-2 in Figur 1,
- Fig. 3: eine perspektivische Ansicht des erfindungsgemäßen Einsatzes und der Bodenwand des Saatgutbehälters, und
- Fig. 4: eine perspektivische Ansicht, in der die zusammenpassende Struktur zum Zusammenkoppeln zweier Einsätze gezeigt ist.

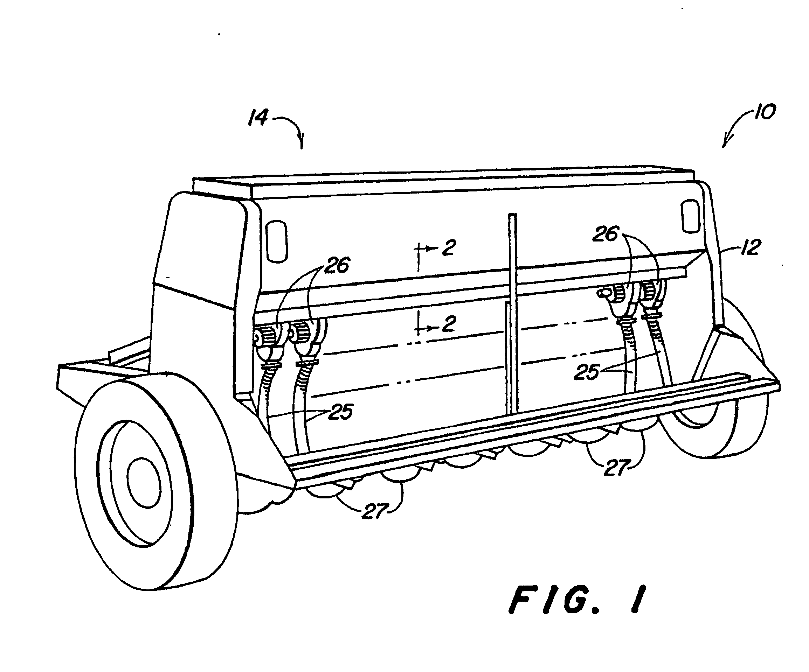

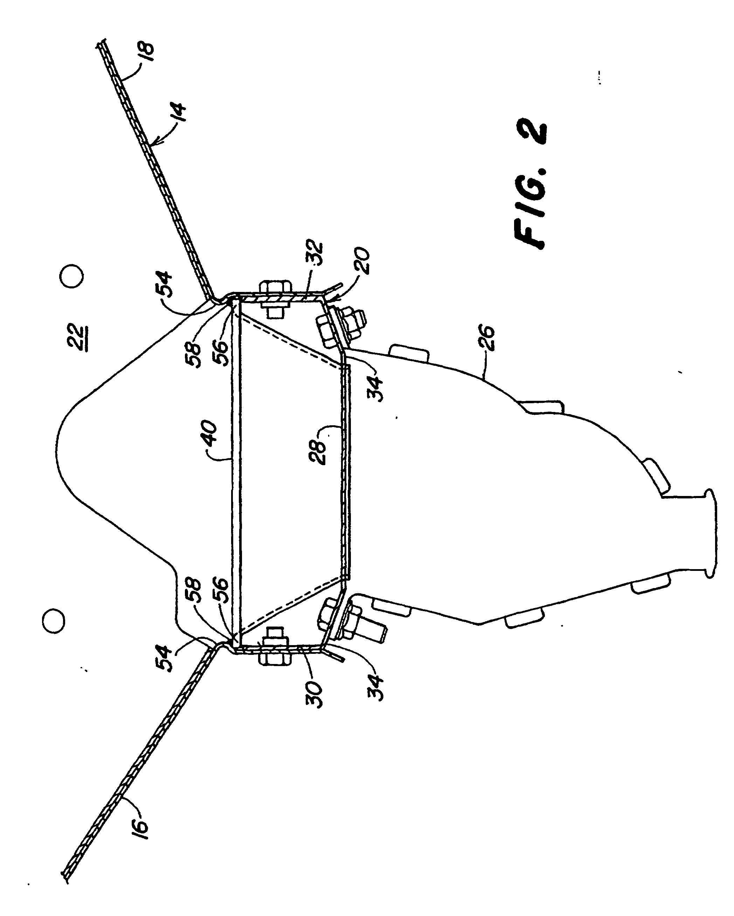

Ein Sägerät 10 in der Art einer Drillmaschine ist in Figur 1 dargestellt und weist einen Rahmen 12 auf. Von dem Rahmen 12 wird ein Saatgutbehälter 14 getragen. Der Saatgutbehälter 14 hat eine vordere Wand 16 und eine rückwärtige Wand 18, die sich nach unten zu einem unteren Trog 20 neigen. Der Saatgutbehälter 14 hat auch beabstandete Endwände 22, von denen nur eine gezeigt wird, s. Figur 2. Im unteren Trog 20 ist eine Vielzahl voneinander beabstandeter Öffnungen 24 vorhanden. Saatgut aus dem Saatgutbehälter 14 fällt durch die Öffnungen 24 zu Saatgut abmessenden Einrichtungen 26 unterhalb jeder Öffnung 24. Die Saatgut abmessenden Einrichtungen 26 messen das Saatgut ab, das durch die Öffnungen 24 fällt. Von den Öffnungen 24 gelangt das Saatgut durch Saatgutrohre 25 zu Furchenöffnern 27, wo das Saatgut in einer Furche im Erdboden abgelegt wird.

Der Trog 20 hat eine Bodenwand 28, eine vordere, senkrechte Wand 30, eine hintere, senkrechte Wand 32 und geneigte Übergangsabschnitte 34 zwischen der Bodenwand 28 und den vorderen und hinteren senkrechten Wänden 30, 32. Zwischen den beabstandeten Öffnungen 24 hat die Bodenwand 28 im wesentlichen flache Abschnitte 36. Saatgut wird sich auf diesen flachen Abschnitten 36 ansammeln und nicht durch eine Öffnung 24 fallen, was eine unvollständige Entleerung des Saatgutbehälters zur Folge hat.

Die vorliegende Erfindung stellt einen Einsatz 40 bereit, der die Bodenwand 28 bedeckt, um ein Ansammeln von Saatgut auf den flachen Abschnitten 36 zu verhindern. Der Einsatz 40 ist vorzugsweise in ein oder zwei Stücken im Vakuum aus Kunststoff gegossen. Alternativ kann der Einsatz 40 aus Metallblech gepresst sein. Der Einsatz 40 bildet eine Reihe von Trichterabschnitten 42. Das offene untere Ende jedes Trichterabschnitts 42 ist mit einer ihm zugeordneten Öffnung 24 in dem unteren Trog 20 ausgerichtet. Die Trichterabschnitte 42 haben geneigte Wände, die zu einem offenen unteren Ende 44 führen. Geneigte Seitenwände 46, 48 zwischen den offenen unteren Enden 44 überdecken die flachen Abschnitte 36 des unteren Trogs 20 und verhindern, dass Saatgut darauf verbleibt. Außerdem haben die Trichterabschnitte 42 vordere und hintere geneigte Wände 50, 52, um Saatgut von der vorderen Wand 16 bzw. der rückwärtigen Wand 18 des Saatgutbehälters 14 zu führen. Die Trichterabschnitte 42 sind rechteckförmig, jeder hat vier geneigte Wände 46 - 52. Während der Saatgutbehälter 14 mit einem unteren Trog 20 gezeigt ist, ist anzumerken, dass ein erfindungsgemäßer Einsatz 40 an einem Saatgutbehälter benutzt werden kann, der eine flache Bodenwand aufweist, die sich zwischen den unteren Kanten der vorderen und rückwärtigen Wände 16, 18 erstreckt.

Die unteren Kanten der vorderen und rückwärtigen Wände 16, 18 des Saatgutbehälters 14 sind mit einer überhängenden Lippe 54 hergestellt, so dass kurz darunter eine flache Einbuchtung geschaffen wird. Die Einbuchtung nimmt einen randseitigen Flansch 56 des Einsatzes 40 auf, um den Einsatz 40 durch Einschnappen an Ort und Stelle zu fixieren. Wenn es gewünscht wird, kann ein kleiner Wulst 58 einer Silikonabdichtung zwischen der Lippe 54 und dem Flansch 56 angebracht werden, um diese gegen Verunreinigungen abzudichten.

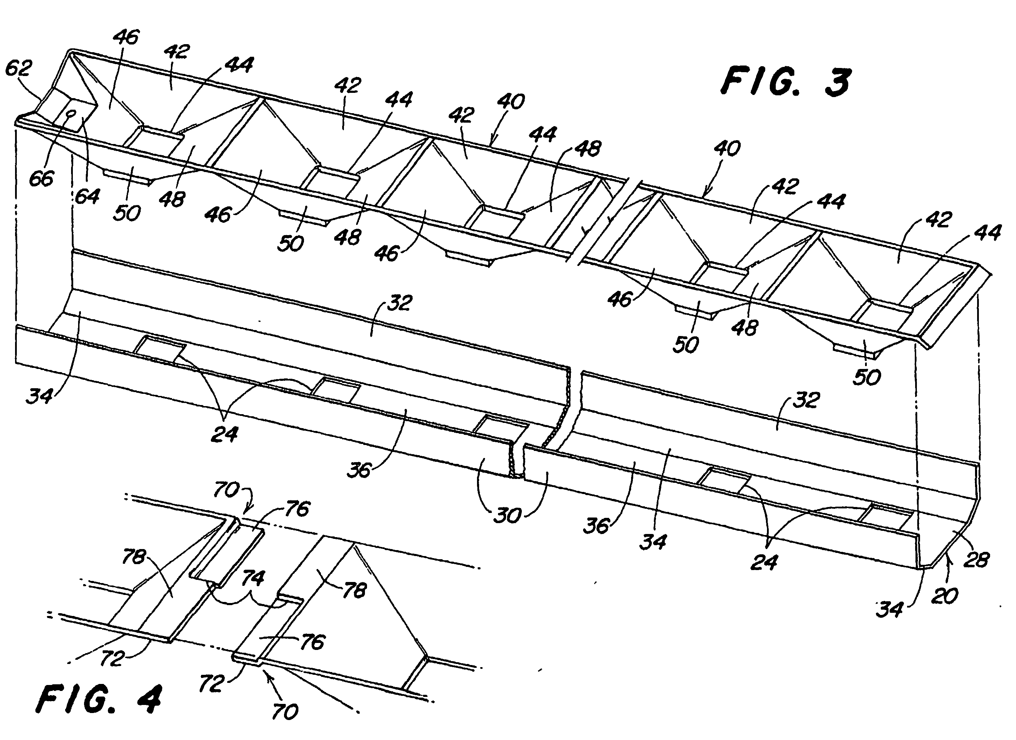

In der in Figur 3 gezeigten Ausführungsform ist an einem Ende 62 des Einsatzes 40 die geneigte Seitenwand 46 durch einen horizontalen Endflansch 64 unterbrochen. Eine Öffnung 64 ist in den Endflansch 64 eingebracht. Die Öffnung wird für einen Stab (nicht gezeigt) verwendet, der durch den Einsatz 42 verläuft und einen Schwimmer im Innern des Saatgutbehälters 14 mit einer Anzeigeeinrichtung für die Höhe des Saatguts verbindet, welche an der Außenseite des Saatgutbehälters 14 angeordnet ist. Bei einem Sägerät mit zwei Seite an Seite angeordneten Saatgutbehältern werden Einsätze 40 in jeden Saatgutbehälter 14 eingesetzt, wobei die Enden 62 der Einsätze 40 an den inneren Enden der Saatgutbehälter 14 angeordnet werden. Die Stäbe zur Saatguthöhenmessung sind an den inneren Enden der Saatgutbehälter, so dass die zwei Anzeigeeinrichtungen zur Verbesserung der Bequemlichkeit beim Ablesen der zwei Höhenanzeigeeinrichtungen nahe aneinander angeordnet sind. Die inneren Enden der Saatgutbehälter 14 sind somit einander zugewandt, und die Einsätze 40 sind identisch, wobei der Einsatz 40 eines Saatgutbehälters 14 um 180° gegenüber dem Einsatz 40 des jeweils anderen Saatgutbehälters 14 gedreht ist.

Ein einzelner Einsatz 40 kann hergestellt werden, der sich zwischen den zwei Enden des Saatgutbehälters 14 erstreckt. Es ist jedoch im allgemeinen leichter und weniger kostspielig, zwei Einsätze zu haben, die Ende an Ende in jedem Saatgutbehälter 14 angeordnet sind. Das reduziert die Länge jedes Einsatzes und verringert die Kosten für die Form für den Einsatz. Es werden zwei identische Einsätze benutzt. Die Enden 62 der zwei Einsätze 40 mit der Öffnung 66 für die Stäbe zur Saatguthöhenmessung sind an den Enden des Saatgutbehälters 14 angeordnet. Die Öffnung 66, die nicht für den Stab zur Höhenmessung benutzt wird, ist durch einen Stopfen verschlossen. Die anderen Enden 70 der Einsätze 40 sind in Figur 4 dargestellt und mit im Eingriff stehenden, zusammenpassenden Merkmalen ausgestattet, um die zwei Einsätze 40 aneinander zu koppeln. Die Enden 70 haben einen Endflansch 72, der durch einen Absatz 74 oder eine Kante unterteilt ist, die zwei Streifen 76, 78 bildet. Die Streifen 76 sind unterhalb der Ebene der Streifen 78 angeordnet und die zwei Enden sind zusammengefügt, wobei der Streifen 76 eines Einsatzes 40 neben dem Streifen 78 des anderen Einsatzes angeordnet ist, wie in Figur 4 gezeigt. Während zwei zusammenpassende, im Eingriff befindliche Einsätze 40 gezeigt werden, ist anzumerken, dass eine Vielzahl an Einsätzen 40 bereitgestellt werden kann, deren Enden zusammengefügt sind. Die bevorzugte Ausführungsform weist jedoch nur zwei zusammengefügte Einsätze 40 auf, da identische Teile verwendet werden können.

Der Einsatz 40 stellt ein relativ einfaches und leicht installiertes Element bereit, das eine vollständige Entleerung des Saatgutbehälters 14 zur Folge hat, ohne dass ein Bediener Saatgut von den flachen Abschnitten 36 der Bodenwand 28 zu fegen braucht. Die flachen Abschnitte 36 des gesamten Saatgutbehälters 14 sind von dem Einsatz 40 bzw. den Einsätzen 40 überdeckt, so dass die beim Zusammenbau zum Abdecken der flachen Abschnitte 36 erforderliche Arbeit vermindert ist. Außerdem ist die Menge des zum Abdichten des Einsatzes 40 erforderlichen Silikons beträchtlich vermindert gegenüber der Menge, die bei separaten Einsätzen verwendet wird, die jeweils nur einen flachen Abschnitt 36 zwischen den Öffnungen 24 abdecken.

## Patentansprüche

1. Saatgutbehälter (14) für ein Sägerät (10), mit vier seitlichen Wänden (16, 18, 22) und einer Bodenwand (28), die eine Vielzahl voneinander beabstandeter Öffnungen (24) aufweist, durch die Saatgut fallen kann, und mit einem oberhalb der Bodenwand (28) angeordneten Einsatz (40) zum Abdecken der Bodenwand (28), der einen einer Öffnung (24) zugeordneten Trichterabschnitt (42) aufweist, **dadurch gekennzeichnet, dass** der Einsatz (40) eine Mehrzahl von Trichterabschnitten (42) aufweist, die jeweils einer Öffnung (24) zugeordnet sind.

2. Saatgutbehälter (14) nach Anspruch 1, **dadurch gekennzeichnet, dass** jeder Trichterabschnitt (42) ein offenes, unteres Ende (44) aufweist, das mit der ihm zugeordneten Öffnung (24) ausgerichtet ist, und zwischen den Öffnungen (24) mit geneigten Wänden (46, 48, 50, 52) versehen ist, wobei der Abschnitt (36) der Bodenwand (28) zwischen den Öffnungen (24) von den geneigten Wänden (46, 48, 50, 52) der Trichterabschnitte (42) abgedeckt ist.

3. Saatgutbehälter (14) nach Anspruch 1 oder 2, **dadurch gekennzeichnet, dass** die Bodenwand (28) Teil eines Trogs (20) ist, der die Bodenwand (28) und eine vordere senkrechte Wand (30) und eine rückwärtige senkrechte Wand umfasst, die mit einer vorderen Wand (16) bzw. einer rückwärtigen Wand (18) des Saatgutbehälters (14) verbunden sind, und dass der Einsatz (14) in Einbuchtungen an den Verbindungsstellen zwischen der vorderen Wand (30) des Trogs (20) und der vorderen Wand (16) des Saatgutbehälters (14) und zwischen der rückwärtigen Wand (32) des Trogs (20) und der rückwärtigen Wand (18) des Saatgutbehälters (14) eingerastet ist.

4. Saatgutbehälter (14) nach einem der Ansprüche 1 bis 3, **dadurch gekennzeichnet, dass** der Einsatz (40) ein einzelnes Stück vorzugsweise gegossenen oder gespritzten Kunststoffs ist.

5. Saatgutbehälter (14) nach einem der vorhergehenden Ansprüche, **dadurch gekennzeichnet, dass** der Einsatz (40) sich zwischen den gegenüberliegenden Endwänden (22) des Saatgutbehälters (14) erstreckt.

6. Saatgutbehälter (14) nach einem der Ansprüche 1 bis 4, **dadurch gekennzeichnet, dass** zwei oder mehr Einsätze (40) Ende an Ende angeordnet sind.

7. Saatgutbehälter (14) nach Anspruch 6, **dadurch gekennzeichnet, dass** die Einsätze (40) identisch sind.

8. Saatgutbehälter (14) nach Anspruch 6 oder 7, **dadurch gekennzeichnet, dass** die Einsätze (40) an ihren benachbarten Enden zusammenpassende Merkmale aufweisen, um die Einsätze (40) zusammenzufügen.

9. Saatgutbehälter (14) nach Anspruch 8, **dadurch gekennzeichnet, dass** die Einsätze (40) endseitig mit zwei durch einen Absatz (74) getrennten Streifen (76, 78) versehen sind, wobei ein Streifen (76) unterhalb der Ebene des anderen Streifen (78) liegt und die Enden der Einsätze (40) miteinander zusammengefügt sind, indem der untere Streifen (76) eines Einsatzes (40) neben dem unteren Streifen (78) des anderen Einsatzes (40) angeordnet wird.

10. Sägerät (10) mit einem Saatgutbehälter (14) nach einem der vorhergehenden Ansprüche.

11. Einteiliger Einsatz (40) für einen Saatgutbehälter (14) eines Sägeräts (10), mit einem Trichterabschnitt (42), der ein offenes unteres Ende (44) aufweist und mit sich von dem offenen unteren Ende (44) trichterförmig nach oben öffnenden, geneigten Wänden (46, 48, 50, 52) versehen ist, **dadurch gekennzeichnet, dass** der Einsatz (40) eine Mehrzahl von Trichterabschnitten (42) aufweist.

## Claims

1. A seed container (14) for a seed drill (10), with four sidewalls (16, 18, 22) and a bottom wall (28) which has a plurality of openings (24) spaced from one another, through which seeds can fall, and with an insert (40) arranged above the bottom wall (28) for covering the bottom wall (28) and having a funnel section (42) associated with an opening (24), **characterized in that** the insert (40) comprises a plurality of funnel sections (42) which are each associated with an opening (24).

2. A seed container (14) according to claim 1, **characterized in that** each funnel section (42) has an open lower end (44) which is aligned with the opening (24) associated with it and is provided between the openings (24) with inclined walls (46, 48, 50, 52), the section (36) of the bottom wall (28) between the openings being covered by the inclined walls (46, 48, 50, 52) of the funnel sections (42).

3. A seed container (14) according to claim 1 or 2, **characterized in that** the bottom wall (28) is part of a trough (20) which comprises the bottom wall (28) and a front vertical wall (30) and a rear vertical wall, which are connected to a front wall (16) and a rear wall (18) respectively of the seed container (14), and **in that** the insert (40) is snapped into indentations at the joint locations between the front wall (30) of the trough (20) and the front wall (16) of the seed container (14) and between the rear wall (32) of the trough (20) and the rear wall (18) of the seed container (14).

4. A seed container (14) according to any of claims 1 to 3, **characterized in that** the insert (40) is a single piece of preferably cast or injection moulded plastics material.

5. A seed container (14) according to any of the preceding claims, **characterized in that** the insert (40) extends between the opposite end walls (22) of the seed container (14).

6. A seed container (14) according to any of claims 1 to 4, **characterized in that** two or more inserts (40) are arranged end to end.

7. A seed container (14) according to claim 6, **characterized in that** the inserts (40) are identical.

8. A seed container (14) according to claim 6 or 7, **characterized in that** the inserts (40) comprise matching features at their adjacent ends, in order to join the inserts (40).

9. A seed container (14) according to claim 8, **characterized in that** the inserts (40) are provided at the ends with two strips (76, 78) separated by a step (74), wherein one strip (76) lies below the plane of the other strip (78) and the ends of the inserts (40) are joined **in that** the lower strip (76) of one insert (40) is arranged beside the upper strip (78) of the other insert (40).

10. A seed drill (10) with a seed container (14) according to any of the preceding claims.

11. A one-part insert (40) for a seed container (14) of a seed drill (10), with a funnel section (42), which comprises an open lower end (44) and is provided inclined walls (46, 48, 50, 52) opening at the top in the manner of a funnel from the open lower end (44), **characterized in that** the insert (40) comprises a plurality of funnel sections (42).

## Revendications

1. Conteneur de semence (14) pour un semoir (10), du type présentant quatre parois latérales (16, 18, 22) et un fond (28) comportant une pluralité d'ouvertures (24), espacées l'une de l'autre, à travers lesquelles la semence peut tomber, et une pièce additionnelle (40), située au-dessus du fond (28) pour recouvrir ce fond (28), et qui présente une section en trémie (42) associée à une ouverture (24), **caractérisé en ce que** la pièce (40) présente une pluralité de sections en trémies (42), qui sont associées chacune à une ouverture (24).

2. Conteneur de semence selon la revendication 1, **caractérisé en ce que** chaque section de trémie (42) présente une extrémité inférieure ouverte (44), qui est alignée avec l'ouverture (24) qui lui est associée et qui, entre les ouvertures (24), comporte des parois inclinées (46, 48, 50, 52), la section (36) du fond (28) située entre les ouvertures (24) étant recouverte par les parois inclinées (46, 48, 50, 52) de la section en trémie (42).

3. Conteneur de semence selon l'une ou l'autre des revendications 1 ou 2, **caractérisé en ce que** le fond (28) constitue une portion d'une auge (20), qui se compose du fond (28), d'une paroi avant verticale (30), et d'une paroi arrière verticale, qui sont réunies avec une paroi avant (16) et une paroi arrière (18) du conteneur de semence (14), et **en ce que** la pièce (40) est engagée dans des creux aux emplacements de liaison entre la paroi avant (30) de l'auge (20) et la paroi avant (16) du conteneur de semence, et entre la paroi arrière (32) de l'auge (20) et la paroi arrière (18) du conteneur de semence (14).

4. Conteneur de semence selon l'une quelconque des revendications 1 à 3, **caractérisé en ce que** la pièce additionnelle (40) est en une seule pièce, de préférence coulée ou injectée en matière plastique.

5. Conteneur de semence selon l'une quelconque des revendications précédentes, **caractérisé en ce que** la pièce additionnelle (40) s'étend entre les parois terminales opposées (22) du conteneur de semence (14).

6. Conteneur de semence selon l'une quelconque des revendications 1 à 4, **caractérisé en ce que** deux ou plusieurs pièces additionnelles (40) sont disposées bout à bout.

7. Conteneur de semence selon la revendication 6, **caractérisé en ce que** les pièces additionnelles sont identiques.

8. Conteneur de semence selon l'une ou l'autre des revendications 6 ou 7, **caractérisé en ce que** les pièces additionnelles (40) présentent à leurs extrémités voisines des caractéristiques correspondant les unes aux autres, de manière à ce que les pièces (40) s'adaptent ensemble.

9. Conteneur de semence selon la revendication 8, **caractérisé en ce que** les pièces (40) comportent à leurs extrémités deux bandes (76, 78) séparées par un épaulement (74), une bande (76) étant située au-dessus du plan de l'autre bande (78), et les extrémités des pièces (40) s'adaptent l'une avec l'autre, la bande inférieure (76) d'une pièce (40) se situant contre la bande supérieure de l'autre pièce (40).

10. Semoir (10) équipé d'un conteneur à semence selon l'une quelconque des revendications précédentes.

11. Pièce additionnelle unitaire (40), destinée à un conteneur à semence (14) d'un semoir (10), comportant une section en trémie (42), qui présente une extrémité inférieure ouverte (44), et pourvue de parois inclinées (46, 48, 50, 52), s'ouvrant vers le haut en forme de trémie, depuis l'extrémité inférieure ouverte (44), **caractérisé en ce que** la pièce additionnelle (40) présente une pluralité de sections en trémies (42).
